# EUROPÄISCHE PATENTANMELDUNG

(11) **EP 1 870 753 A1**
(43) Veröffentlichungstag der Anmeldung: **26.12.2007**
(21) Anmeldenummer: 06012834.5
(22) Anmeldetag: 22.06.2006
(51) Int. Cl.: G02B 7/02, H04N 5/74, H04N 9/31

(54) **Aus mehreren optischen Baugruppen gebildetes Projektionsobjektiv mit fester Brennweite für die digitale Projektion**

(71) Anmelder: BCI Finanz AG, 6304 Zug (CH)
(72) Erfinder: Bretthauer, Bernward, 37073 Göttingen (DE)
(74) Vertreter: Quermann, Helmut

(57) **Zusammenfassung**

Die Erfindung betrifft ein Projektionsobjektiv (11) mit fester Brennweite für die digitale Projektion.

Es zeichnet sich durch folgende Merkmale aus:
- eine in einem ersten Objektivgehäuse (12) gelagerte erste optische Baugruppe (15) mit mehreren Linsen (1, 2, 3, 4),
- eine in einem zweiten Objektivgehäuse (13) gelagerte zweite optische Baugruppe (16) mit mehreren Linsen (5, 6, 7, 8, 9),
- ein drittes Objektivgehäuse (14), das im Bereich seines einen Endes das erste Objektivgehäuse (12) und im Bereich seines anderen Endes das zweite Objektivgehäuse (13) aufnimmt.

Ein solches Objektiv ist baulich einfach gestaltet und ermöglicht eine einfache und präzise Montage.

## Beschreibung

Die Erfindung betrifft ein Projektionsobjektiv mit fester Brennweite für die digitale Projektion, insbesondere für das digitale Kino. Das Projektionsobjektiv findet zum Beispiel als Grundobjektiv mit einem anamorphotischen Vorsatz Verwendung.

### Stand der Technik:

Im digitalen Kino eingesetzte Projektoren zeichnen sich durch ein Strahlteilerprisma zwischen den Chips und dem Objektiv aus. Der Glasweg beträgt bis zu 119,5 mm, wodurch ein Farblängsfehler sowie ein Öffnungsfehler entsteht. Diese Fehler müssen vom Projektionsobjektiv korrigiert werden. Daher sind für andere Fälle berechnete Objektive grundsätzlich ungeeignet.

Am Markt werden im wesentlichen Zoomobjektive angeboten. Für feste Installationen ist jedoch ein Zoomobjektiv nicht notwendig. Des Weiteren geschieht die Konversion des Chip-Formats auf das Bild-Format 2.35 : 1 im digitalen Kino vorteilhaft mit Hilfe eines anamorphotischen Vorsatzes. Um die Abmessungen des Vorsatzes und damit die Kosten zu verringern, ist es erforderlich, dass die leinwandseitige Pupille des Objektivs nicht so weit von der Frontlinse entfernt ist. Dieses Ziel ist mit Zoomobjektiven schwer zu verwirklichen.

In der DE 103 53 563 B4 ist ein Projektionsobjektiv mit fester Brennweite für die digitale Projektion beschrieben, das neun Linsen aufweist. Dieses erfüllt die vorgenannten Anforderungen. Allerdings enthält dieses Objektiv in allen angegebenen Ausführungsformen eine asphärische Fläche, welche die Projektionskosten erhöht. - Die Offenbarung dieser Schrift beschränkt sich auf die physikalische Betrachtung des Projektionsobjektivs. Angaben über dessen konstruktive Gestaltung sind der Schrift nicht zu entnehmen.

Um mit einem Projektionsobjektiv eine optimale Abbildungsqualität zu verwirklichen, ist es erforderlich, die Linsen genauestens bezüglich der optischen Achse des Projektionsobjektivs zu zentrieren. Es ist hierbei eine Genauigkeit der Zentrierung von wenigen 1/1000 mm sicherzustellen. Nur so lässt sich eine hervorragende Brillanz erreichen.

### Ziel der Erfindung :

Ziel ist ein Projektionsobjektiv mit fester Brennweite für die digitale Projektion zu schaffen, das baulich einfach gestaltet ist und einfach und präzise montiert werden kann.

### Darlegung der Erfindung :

Das genannte Ziel der Erfindung wird erreicht durch ein Projektionsobjektiv gemäß den Merkmalen des Patentanspruchs 1, somit durch ein Projektionsobjektiv mit fester Brennweite für die digitale Projektion mit folgenden Merkmalen:
- eine in einem ersten Objektivgehäuse gelagerte erste optische Baugruppe mit mehreren Linsen,
- eine in einem zweiten Objektivgehäuse gelagerte zweite optische Baugruppe mit mehreren Linsen,
- ein drittes Objektivgehäuse, das im Bereich seines einen Endes das erste Objektivgehäuse und im Bereich des anderen Endes das zweite Objektivgehäuse aufnimmt.

In einfachster Gestaltung stellt das dritte Objektivgehäuse ein Verbindungsteil für das erste und das zweite Objektivgehäuse dar. Diese geteilte Ausbildung des Projektionsobjektives ermöglicht es, die Linsen der ersten optischen Baugruppe unabhängig von den Linsen der zweiten optischen Baugruppe zu montieren. Nachdem die Linsen der ersten optischen Baugruppe im ersten Objektivgehäuse montiert und damit auch zentriert sind, und auch die Montage der Linsen der zweiten optischen Baugruppe im zweiten Objektivgehäuse, einschließlich Zentrierung, erfolgt ist, kann das Projektionsobjektiv durch Verbinden des ersten Objektivgehäuses und des zweiten Objektivgehäuses mit dem dritten Objektivgehäuse fertig montiert werden.

Durch präzise Lagerung der einzelnen Objektgehäuse lassen sich diese optimal zueinander ausrichten bzw. zentrieren.

Bei dem Projektionsobjektiv handelt es sich insbesondere um ein solches mit maximal neun Linsen. Besitzt das Objektiv neun Linsen, weist die eine der optischen Baugruppen insbesondere vier Linsen und die andere der optischen Baugruppen insbesondere fünf Linsen auf. Konkret ist vorgesehen, das Projektionsobjektiv so zu gestalten, dass das Objektiv auf seiner Vergrößerungsseite die erste optische Baugruppe aufweist, die vier Linsen - Linsen 1 bis 4 - beinhaltet, und auf seiner Verkleinerungsseite die zweite optische Baugruppe aufweist, die fünf Linsen - Linsen 5 bis 9 - beinhaltet.

Vorzugsweise sind bei dem Projektionsobjektiv die Linsen wie folgt in der Reihenfolge vom Bild (Vergrößerungsseite) zum Objekt (Verkleinerungs- und Beleuchtungsseite) angeordnet:
- eine erste negative Linse,
- eine zweite negative Linse,
- eine dritte Linse,
- eine vierte positive Linse,
- eine fünfte Linse,
- eine sechste positive Linse,
- eine siebte negative Linse,
- eine achte positive Linse,
- eine neunte positive Linse.

Zwischen der vierten und der fünften Linse ist beispielsweise eine Blende angeordnet.

Vorteilhaft sind zwei Linsen der zweiten optischen Baugruppe, insbesondere die siebte und achte Linse miteinander verkittet.

Darüber hinaus wird es als vorteilhaft angesehen, insbesondere unter Kostengründen, wenn sämtliche Linsenflächen der Linsen des Projektionsobjektivs sphärisch oder plan sind.

Es ist selbstverständlich möglich, auch im dritten Objektgehäuse eine dritte optische Baugruppe zu lagern.

Unter dem Aspekt der Zentrierung sollte mindestens eine Linse und/oder ein Kittglied bezüglich deren optischen Achse mittels Zentriermitteln zentrierbar sein. Vorzugsweise sind die Mehrzahl der Linsen des Projektionsobjektivs zentrierbar. Eine Linse kann einzeln zentrierbar sein. Es ist durchaus denkbar, mehrere benachbarte Linsen gemeinsam zu zentrieren.

Die Zentriermittel für die jeweilige Linse bzw. das Kittglied weisen vorzugsweise mindestens drei Gewindestifte auf, die radial gerichtet sind und in Gewindebohrungen des der jeweiligen Linse bzw. des Kittglieds zugeordneten Objektgehäuses eingeschraubt sind. Diese Gewindestifte sind insbesondere in identischer Winkelteilung angeordnet. Sind drei Gewindestifte zum Zentrieren angeordnet, schließen benachbarte Gewindestifte demnach einen Winkel von 120° miteinander ein; im Fall von vier Gewindestiften beträgt der Winkel 90°.

Die Zentrierung benachbarter Linsen kann beispielsweise über gemeinsame Zentriermittel erfolgen, wobei die beiden Linsen im Bereich der einander zugewandten Linsenflächen in einem beidseitig konischen Lagerring gehalten sind, auf den die Zentriermittel einwirken.

Zum einfachen Montieren der Linsen sind vorteilhaft zusätzliche Mittel zum Festlegen mindestens einer Linse in Richtung der optischen Achse vorgesehen, die einen Anschlag des Objektgehäuses und/oder ein zwischen Linsen wirksames Distanzteil und/oder einen in das Objektivgehäuse einschraubbaren Ring aufweisen.

### Ausführungsbeispiel der Erfindung:

Weitere Merkmale der Erfindung sind in den Unteransprüchen, der Beschreibung der einzigen Figur und dieser Figur selbst dargestellt, wobei bemerkt wird, dass alle Einzelmerkmale und alle Kombinationen von Einzelmerkmalen weitere erfinderische Ausgestaltungen darstellen.

Das Ausführungsbeispiel ist nachfolgend unter Hinweis auf die Zeichnung näher erläutert. Es zeigt:

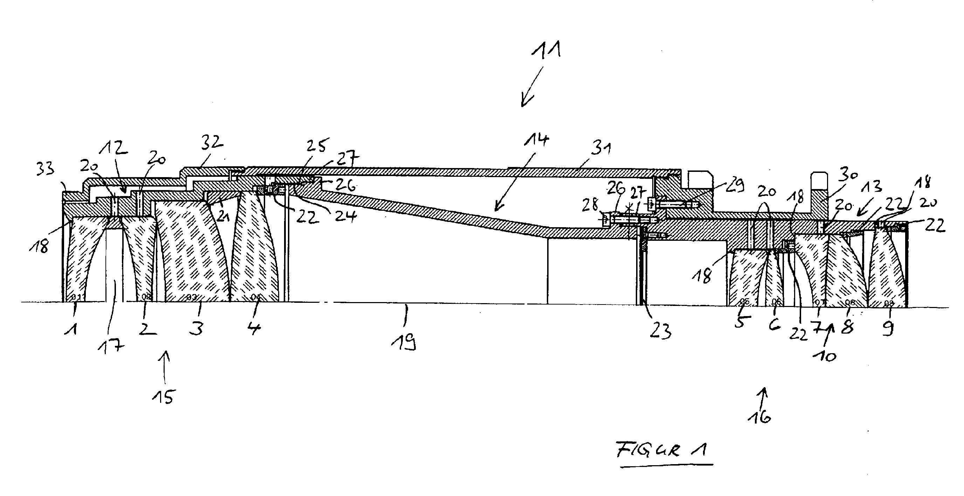

Figur 1 einen Längsmittelschnitt durch das rotationssymmetrisch gestaltete Projektionsobjektiv.

Gezeigt ist eine Hälfte des Projektionsobjektivs 11, das neun Linsen aufweist. Das Projektionsobjektiv ist mit folgender Anordnung der Linsen in der Reihenfolge vom Bild (Vergrößerungsseite) zum Objekt (Verkleinerungs- und Beleuchtungsseite) gestaltet:
- Eine erste negative Linse 1 mit einer konvexen Fläche auf der Bildseite und einer konkaven Fläche auf der Objektseite,
- eine zweite bikonkave Linse 2,
- eine dritte Linse 3 mit einer konkaven Fläche auf der Bildseite und einer konvexen Fläche auf der Objektseite,
- eine vierte bikonvexe Linse 4,
- eine fünfte Linse 5 mit einer konvexen Fläche auf der Bildseite und einer konkaven Fläche zur Objektseite,
- eine sechste bikonvexe Linse 6,
- eine siebte bikonkave Linse 7,
- eine achte bikonvexe Linse 8,
- eine neunte bikonvexe Linse 9.

Die Linsen 7 und 8 sind miteinander verkittet, stellen somit ein Kittglied 10 dar.

Das Projektionsobjektiv 11 weist ein erstes Objektivgehäuse 12, ein zweites Objektivgehäuse 13 und ein drittes Objektivgehäuse 14, das im Bereich seines einen Endes das erste Objektivgehäuse 12 und im Bereich seines anderen Endes das zweite Objektivgehäuse 13 aufnimmt, auf. Im ersten Objektivgehäuse 12 ist eine erste optische Baugruppe 15 gelagert, die die Linsen 1 bis 4 umfasst, und in dem zweiten Objektivgehäuse 13 ist eine zweite optische Baugruppe 16 gelagert, die die Linsen 5 bis 9 umfasst.

Die beiden optischen Baugruppen 15 und 16 werden unabhängig montiert und hierbei die Linsen zentriert und dann das Projektionsobjektiv 11 zusammengesetzt.

Die Montage der ersten optischen Baugruppe 15 geschieht wie folgt: Zwischen den beiden Linsen 1 und 2 ist ein Zentrierring 17 angeordnet, der als beidseitig konisch gestalteter Lagerring ausgeführt ist. An dessen konischen Flächen liegen die Linsen 1 und 2 an. Diese drei Teile sind von der Objektseite des Objektivgehäuses 12 eingeschoben und es liegt die Linse 1 auf ihrer Bildseite an einem radial nach innen gerichteten Vorsprung 18 des Objektivgehäuses 12 an. Die beiden Linsen 1 und 2 und der Zentrierring 17 besitzen einen identischen Außendurchmesser, der geringfügig geringer ist als der Innendurchmesser des Objektivgehäuses 12 in diesem Bereich. In diesem Bereich weist das Objektivgehäuse 12 drei Gewindebohrungen, die unter einem Winkel von 120° zur optischen Achse 19 des Objektivs 11 angeordnet sind, auf und in die Zentrierstifte 20 eingeschraubt sind, die auf den Zentrierring 17 einwirken. Durch radiales Verstellen der drei Zentrierstifte 20 lässt sich der Zentrierring 17 bezüglich der optischen Achse 19 exakt zentrieren, konkret im 1/1000 mm-Bereich, womit auch die im Zentrierring 17 radial gehaltenen Linsen 1 und 2 zentriert sind. Grundsätzlich könnte, wie es angedeutet ist, auch der Linse 2 eigenständige Zentrierstifte 20 zugeordnet sein, die unmittelbar auf die radial äußere Fläche dieser Linse 2 einwirken.

Axial festgelegt wird die Linsengruppe, die aus den Linsen 1 und 2 gebildet ist, durch die Linse 3, die in einem radial nach außen versetzten Rücksprung des Objektivgehäuses 2 gehalten ist und sich mit seiner Bildseite auf der Objektseite der Linse 2 abstützt. Zwischen der Linse 3 und der Linse 4 ist ein Distanzring 21 angeordnet, der sich im radial äußeren Bereich der Linsen 3 und 4 auf der Objektseite der Linse 3 und der Bildseite der Linse 4 abstützt. Der Distanzring 21 und die Linse 4 sind in einem weiter radial nach außen verlaufenden Rücksprung des Objektivgehäuses 12 axial geführt. Das objektseitige Ende des Objektivgehäuses 12 ist mit einem Innengewinde versehen, in das ein Ring 22 eingeschraubt ist. Der in das Objektivgehäuse 12 eingeschraubte Ring 22 kontaktiert die Objektseite der Linse 4. Damit ist die erste optische Baugruppe axial festgelegt, und zwar beginnend mit dem der Bildseite zugeordneten Vorsprung 18, der Linse 1, dem Zentrierring 12, der Linse 2, der Linse 3, dem Distanzring 21, der Linse 4 und dem Ring 22. Zentriert werden bei dieser Baugruppe nur die Linsen 1 und 2 mittels der Zentrierstifte 20.

Auch die zweite optische Baugruppe 16 des zweiten Objektivgehäuses 13 wird von der Objektseite dieses Objektivgehäuses 13 montiert. Auch dieses Objektivgehäuse 13 weist auf der Bildseite einen radial nach innen gerichteten Vorsprung 18 auf und es sind in dem ersten Abschnitt des zweiten Objektivgehäuses 13, das sich an den Vorsprung 18 anschließt, die Linsen 5 und 6 angeordnet, wobei die Linse 5 auf der Objektseite unmittelbar die Linse 6 auf deren Bildseite kontaktiert. Beiden Linsen 5 und 6 sind jeweils drei unter einem Winkel von 120° zur optischen Achse 19 angeordnete Zentrierstifte 20 zum Zentrieren der jeweiligen Linse 5 bzw. 6 zugeordnet. In einen radial nach außen gerichteten anschließenden Rücksprung des Objektivgehäuses 13, der mir einem Gewinde versehen ist, ist ein Ring 22 eingeschraubt, der somit zwischen sich und dem Vorsprung 18 die Linsen 5 und 6 festlegt. In einem weiteren sich radial nach außen anschließenden Rücksprung des Objektivgehäuses 13 ist das Kittglied 10 gelagert, wobei mit der äußeren Umfangsfläche der Linse 7 des Kittglieds 10 in beschriebener Art und Weise drei Zentrierstifte 20 zusammenwirken, die Gewindebohrungen im Objektivgehäuse 13 durchsetzen. Axial festgelegt ist das Kittglied 10 mittels eines weiteren Ringes 22, der in ein Gewinde eines radial weiter außen befindlichen Rücksprungs des Objektivgehäuses 13 eingeschraubt ist und das Kittglied 10 zwischen sich und dem diesem benachbarten Rücksprung 18 im Objektivgehäuse 13 festlegt. Schließlich ist die Linse 9 zwischen einem weiteren Rücksprung 18 des Objektivgehäuses 13 und einem in dieses eingeschraubten Ring 22 festgelegt. Der Zentrierung dieser Linse 9 dienen drei Zentrierstifte 20, die wie vorbeschrieben in das Objektivgehäuse 13 eingeschraubt sind.

Im Bereich des bildseitigen Endes des Objektivgehäuses 13 ist eine Blende 23, insbesondere eine asymmetrische Blende mit dieser verschraubt.

Die beiden optischen Baugruppen 15 und 16 werden einzeln im vorbeschriebenen Sinne montiert und die Linsen, soweit vorgesehen, bezüglich der optischen Achse 19 des Objektivs 11 und damit der jeweiligen Baugruppe 15 bzw. 16 zentriert. Anschließend erfolgt die Endmontage dieses Objektivs 11. Hierbei wird das dritte Objektivgehäuse 14, das auf seiner Bildseite mit einem Außengewinde 24 versehen ist, in ein Innengewinde 25 des ersten Objektivgehäuses 12 auf dessen Objektseite eingeschraubt und ein Formschluss von Objektivgehäuse 12 und Objektivgehäuse 14 über einen Flansch 26 des Objektivgehäuses 14 und einen Steg 27 des Objektivgehäuses 12 herbeigeführt. Entsprechend werden das zweite Objektivgehäuse 13 und das dritte Objektivgehäuse 14 miteinander verbunden, wobei hier eine Steckverbindung vorgesehen ist. Auch dort wird ein Formschluss dieser Gehäuse durch Kontaktierung eines Flansches 26 mit einem Steg 27 herbeigeführt. Die Verbindung von Objektivgehäuse 13 und Objektivgehäuse 14 erfolgt mittels mehrerer Schrauben 28.

Über eine Schraubverbindung - Schrauben 29 - ist es des Weiteren eine Aufnahme 30, die eine Verbindung zum Projektor darstellt, mit dem zweiten Objektivgehäuse 13 verbunden. Die drei Objektivgehäuse 12, 13 und 14 umschließen Abdeckungen 31 und 32, die sich überlappen, wobei die Abdeckung 32, die im Bereich der ersten optischen Baugruppe 15 angeordnet ist, auf der Bildseite mit einem Außengewinde 33 zum Verbinden mit einem Zubehörteil versehen ist.

Das Objektiv weist beispielsweise eine Brennweite von 57 mm bei einer relativen Öffnung von 1 : 2.5 und einem Bildwinkel: 2w = 35.1° oder einer Brennweite von 69 mm bei einer relativen Öffnung von 1 : 2.5 und einem Bildwinkel: 2w = 29.2° auf.

## Patentansprüche

1. Projektionsobjektiv (11) mit fester Brennweite für die digitale Projektion mit folgenden Merkmalen:
- eine in einem ersten Objektivgehäuse (12) gelagerte erste optische Baugruppe (15) mit mehreren Linsen (1, 2, 3, 4),
- eine in einem zweiten Objektivgehäuse (13) gelagerte zweite optische Baugruppe (16) mit mehreren Linsen (5, 6, 7, 8, 9),
- ein drittes Objektivgehäuse (14), das im Bereich seines einen Endes das erste Objektivgehäuse (12) und im Bereich seines anderen Endes das zweite Objektivgehäuse (13) aufnimmt.

2. Objektiv nach Anspruch 1, wobei das Objektiv (11) maximal neun Linsen (1 bis 9) aufweist.

3. Objektiv nach Anspruch 2, wobei eine (15) der optischen Baugruppen (15, 16) vier Linsen (1 bis 4) und die anderen (16) der optischen Baugruppen (15, 16) fünf Linsen (5 bis 9) aufweist.

4. Objektiv nach Anspruch 2 oder 3, wobei das Objektiv (11) auf seiner Vergrößerungsseite die erste optische Baugruppe (15) aufweist, die vier Linsen (1 bis 4) beinhaltet.

5. Objektiv nach einem der Ansprüche 2 bis 4, wobei das Objektiv (11) auf seiner Verkleinerungsseite die zweite optische Baugruppe (16) aufweist, die fünf Linsen (5 bis 9) beinhaltet.

6. Objektiv nach Anspruch 4 oder 5 mit
- einer ersten negativen Linse (1),
- einer zweiten negativen Linse (2),
- einer dritten Linse (3),
- einer vierten positiven Linse (4), und/oder
- einer fünften Linse (5),
- einer sechsten positiven Linse (6),
- einer siebten negativen Linse (7),
- einer achten positiven Linse (8),
- einer neunten positiven Linse (9).

7. Objektiv nach einem der Ansprüche 1 bis 6, wobei es eine Blende (23) aufweist, insbesondere zwischen der vierten und fünften Linse eine Blende angeordnet ist.

8. Objektiv nach einem der Ansprüche 1 bis 7, wobei zwei Linsen (7, 8) der zweiten optischen Baugruppe (16), insbesondere die siebte und achte Linse miteinander verkittet sind.

9. Objektiv nach einem der Ansprüche 1 bis 8, wobei sämtliche Linsenflächen sphärisch oder plan sind.

10. Objektiv nach einem der Ansprüche 1 bis 9, wobei im dritten Objektivgehäuse (14) eine dritte optische Baugruppe gelagert ist.

11. Objektiv nach einem der Ansprüche 1 bis 10, wobei mindestens eine Linse (1, 2, 5, 6, 9) und/oder ein Kittglied (10) bezüglich deren optischen Achse (19) mittels Zentriermitteln (20, 17) zentrierbar ist.

12. Objektiv nach Anspruch 11, wobei zwei benachbarte Linsen (1, 2; 7, 8) über Zentriermittel (20, 17) gemeinsam zentrierbar sind.

13. Objektiv nach Anspruch 11 oder 12, wobei die Zentriermittel (20, 17) für die jeweilige Linse (1, 2, 5, 6, 9) bzw. das Kittglied (10) mindestens drei Gewindestifte (20) aufweisen, die radial gerichtet sind und in Gewindebohrungen des der jeweiligen Linse bzw. des Kittglieds zugeordneten Objektgehäuses (12, 13) eingeschraubt sind.

14. Objektiv nach Anspruch 13, wobei die Gewindestifte (20) in identischer Winkelteilung angeordnet sind, insbesondere benachbarte Gewindestifte (20) einen Winkel von 90° oder 120° miteinander einschließen.

15. Objektiv nach einem der Ansprüche 12 bis 14, wobei die über gemeinsame Zentriermittel (20, 17) zentrierbaren beiden Linsen (1, 2) im Bereich der einander zugewandten Linsenflächen in einem gemeinsamen beidseitig konischen Lagerring (17) gehalten sind, auf den die Zentriermittel (20) einwirken.

16. Objektiv nach einem der Ansprüche 1 bis 15, wobei Mittel (17, 18, 21, 22) zum Festlegen mindestens einer Linse in Richtung der optischen Achse (19) vorgesehen sind, die einen Anschlag (18) des Objektivgehäuses (12, 13) und/oder ein zwischen Linsen wirksames Distanzteil (17, 21) und/oder einen in das Objektivgehäuse (12, 13) einschraubbaren Ring (22) aufweisen.
